# EUROPEAN PATENT APPLICATION

(11) **EP 1 804 113 A1**
(43) Date of publication of application: **04.07.2007**
(21) Application number: 06250001.2
(22) Date of filing: 03.01.2006
(51) Int. Cl.: G02F 1/133, G02F 1/13357, G09G 3/34, G01W 1/10

(54) **Backlit electronic display**

(71) Applicant: EWIG INDUSTRIES MACAO COMMERCIAL OFFSHORE LIMITED, Macau (CN)
(72) Inventor: Chu, Luc Wah Jackson, Macau (CN)
(74) Representative: Jenkins, Richard Gavin

(57) **Abstract**

A backlit electronic display has a display panel having a plurality of alpha-numeric and symbolic display elements selectable to display a plurality of information and a multicolor backlight source for illuminating the display panel. The color of the backlight source changes with information being displayed.

## Description

### Background to the invention

### 1. Field of the Invention

The present invention relates to display panels. More particularly, although not exclusively, the invention relates to a display panel for use in devices such as desktop weather stations, calculators, clocks, radios, clock radios, television sets and the like

### 2. Background Information

Display panels using liquid-crystal technology, for example liquid-crystal displays (LCDs), are well known. LCDs are used in many devices including desktop weather stations, calculators, personal music players and the like. One problem with LCDs is that they can be difficult to read from a distance or in low ambient light conditions. Backlighting makes an LCD easier to read but does not fully ameliorate the above problems.

### Summary of the Invention

It is an object of the present invention to overcome or substantially ameliorate at least one of the above disadvantages and/or more generally to provide an improved backlit electronic display, in particular an LCD, which assists a user in ascertaining the displayed information at a distance. It is another object of invention to provide a backlit electronic display that is easy to read in both high and low ambient light conditions.

There is disclosed herein a backlit electronic display comprising a display panel having a plurality of alpha-numeric and symbolic display elements selectable to display a plurality of information, and a multicolor backlight source for illuminating the display panel wherein color of the backlight source changes with information being displayed.

Preferably, the display panel is a liquid crystal display panel.

Preferably, the plurality of information includes weather forecast information and the color of the backlight source changes with the weather forecast information being displayed.

Preferably, different information of the plurality of information is associated with a mental or physical response and the color of the backlight corresponds to the response.

Preferably, the display further includes a display controller having a user interface and wherein a user can customize the backlight color to be displayed with different ones of the plurality of information.

Preferably, the display further includes a motion sensor for turning the backlight on and off, respectively turning the backlight on when a motion is detected and turning the backlight off a predetermined time after motion is not detected.

Preferably, the display panel comprises segments comprising the display elements and background regions changeable between light transmissive states and an opaque states and wherein for a predetermined period of a day the background regions are light transmissive and the display elements are selectively opaque, and during other periods of the day the background regions are opaque and the display elements are selectively light transmissive.

Preferably, the display further includes a light detector for detecting a level of ambient light. When ambient light levels are high the background regions are light transmissive and the display elements are selectively opaque, and when the ambient light levels are low the background regions are opaque and the display elements are selectively light transmissive.

Preferably, the display is incorporated in a desktop weather station.

Further aspects of the invention will become apparent from the following description.

### Brief Description of the Drawings

A preferred form of the present invention will now be described by way of example with reference to the accompanying drawings, wherein:

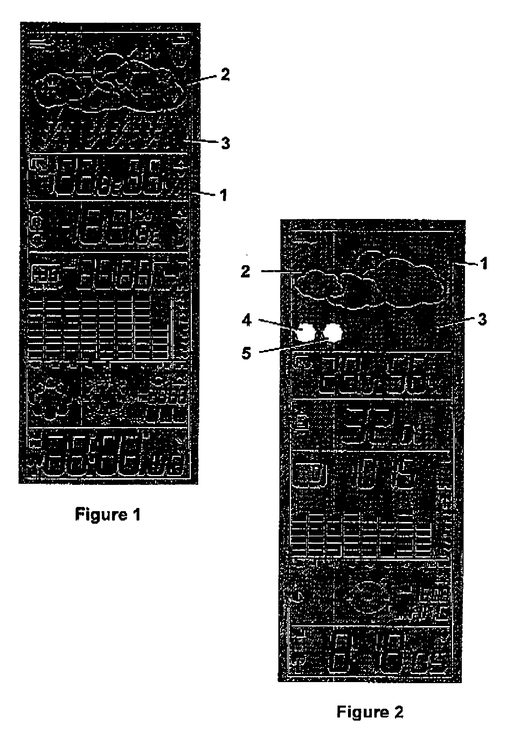

Figures 1 and 2 illustrate different backlit electronic displays according to the invention,
Figure 3 illustrates a desktop weather station, and
Figure 4 illustrates the desktop weather station incorporating the backlit display of figure 2.

### Detailed Description of the Drawings

In the accompanying drawings there is depicted a backlit electronic display comprising an LCD panel 1 having a plurality of alpha-numeric and symbolic display elements 2 selectable to display a plurality of information on background regions 3. Background regions 3 and alpha-numeric and symbolic display elements 2 are changeable between light transmissive states and opaque states. In the drawings the background regions 3 are shown as light transmissive and the display elements are the opaque, dark, areas which make up numbers and symbols of the display. Manufacturer an LDC panel of this nature is well known in the art.

The display also has a multicolor backlight source for illuminating the display panel from behind. The color backlight is visible through the light transmissive parts of the panel 1.

In use different ones of the alpha-numeric and symbolic display elements 2 of the panel 1 have their reflectivity varied by application of a voltage in known manner to make them appear opaque. In this way the panel 1 can be made to display a plurality of different information. It is possible for such information to be categorized, or classified, by type. For example in the case of a desktop weather station the information displayed indicates whether it is hot, cold, humid, dry, cloudy, sunny, raining as well as predicting whether changes. To complement the type of information being displayed the color of the backlight is also changed. The backlight color assists a user in ascertaining the displayed information at a distance. So, for example, in the weather station example mentioned previously the backlight maybe red for hot weather, blue for cold weather, white for rainy weather, yellow for sunny weather etc etc. Different types of information produced different mental and physical human emotions in the same way that colors can and so in the preferred embodiment the colors are matched to the typical emotions that displayed information may instill in the person receiving it.

For example, the backlight color of the preferred embodiment is red to reflect warmth for sunny weather, blue to reflect cold for rainy weather and purple for cloudy weather.

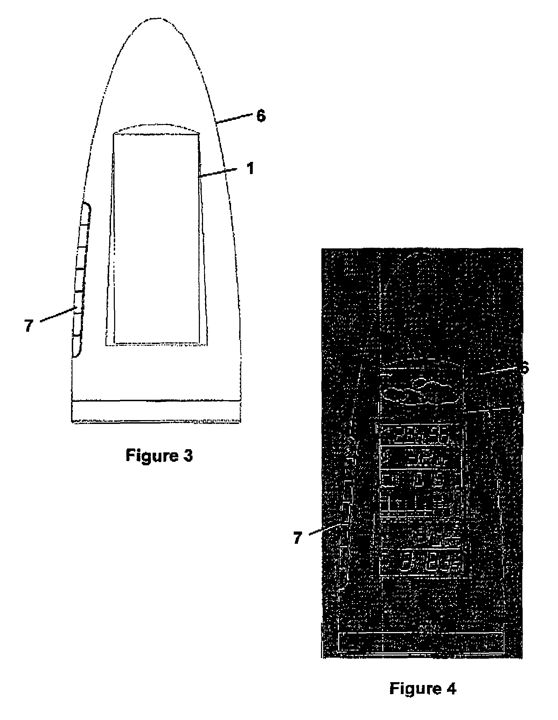

In figures 3 and 4 there is shown a desktop weather station 6 incorporating the backlit electronic display. The weather station has a polarity of buttons 7 providing a user interface. Because different users may feel more strongly about some colors, especially their favorite colors or colors they dislike, the user can customize the backlight color to be displayed with different ones of the plurality of information.

The preferred embodiment of the device also includes a motion sensor 4 for turning the backlight on and off to save the energy, especially in a battery-powered, device. The motion sensor respectively turns the backlight on when a motion is detected near the device and turns the backlight off a predetermined time, say 10 second, after motion is not detected near the device.

The preferred embodiment of the device also includes an ambient light sensor 5 such as a light dependent resistor. When ambient light levels in an environment where the device is located are high the background regions 3 are light transmissive and the display elements are selectively opaque to provide optimum daytime contrast. However, when the sensor 5 detects that ambient light levels are low the display is inverted so that the background regions 3 are opaque and the display elements are selectively light transmissive to be illuminated by the colored backlight. The inverted display state provides optimum viewing in low ambient light. In the preferred embodiment the inverted mode has 'white' display elements on a black background region.

In an alternative embodiment inverting of the display is based on time of the day. During the period of the day having daylight the background regions 3 are light transmissive and the display elements are selectively opaque to provide optimum daytime contrast. During the remaining period to the day the display is inverted.

The backlit electronic display uses different color backlight illumination to assists a user in ascertaining the displayed information from a distance. It also inverts transparency of to background and display element areas of the panel to enhance contrast during low ambient light conditions making the display easier to read.

It should be appreciated that modifications and alternations obvious to those skilled in the art are not to be considered as beyond the scope of the present invention.

## Claims

1. A backlit electronic display comprising:
a display panel having a plurality of alpha-numeric and symbolic display elements selectable to display a plurality of information, and
a multicolor backlight source for illuminating the display panel wherein color of the backlight source changes with information being displayed.

2. The display of claim 1 wherein the display panel is a liquid crystal display panel.

3. The display of claim 1 or claim 2 wherein the plurality of information includes weather forecast information and the color of the backlight source changes with the weather forecast information being displayed.

4. The display of any preceding claim wherein different information of the plurality of information is associated with a mental or physical response and the color of the backlight corresponds to the response.

5. The display of any preceding claim further including a display controller having a user interface and wherein a user can customize the backlight color to be displayed with different ones of the plurality of information.

6. The display of any preceding claim including a motion sensor for turning the backlight on and off, respectively turning the backlight on when motion is detected and turning the backlight off a predetermined time after motion is not detected.

7. The display of any preceding claim including a light detector for detecting a level of ambient light.

8. The display of any preceding claim wherein the display panel comprises segments comprising the display elements and background regions changeable between light transmissive states and opaque states and wherein for a predetermined period of a day the background regions are light transmissive and the display elements are selectively opaque, and during other periods of the day the background regions are opaque and the display elements are selectively light transmissive.

9. The display of any preceding claim wherein the display panel comprises segments comprising the display elements and background regions changeable between light transmissive states and an opaque states and wherein when ambient light levels are high the background regions are light transmissive and the display elements are selectively opaque, and when the ambient light levels are low the background regions are opaque and the display elements are selectively light transmissive.

10. A desktop weather station incorporating the display of any preceding claim wherein the plurality of information includes weather forecast information and the color of the backlight source changes with the weather forecast information being displayed.
